# FASCICULE DE BREVET EUROPEEN

(11) **EP 0 696 168 B1**
(45) Date de publication et mention de la délivrance du brevet: **26.02.1997**
(21) Numéro de dépôt: 94914432.3
(22) Date de dépôt: 22.04.1994
(51) Int. Cl.: A01N 25/14

(54) **COMPOSITIONS CONCENTREES DE MATIERES ACTIVES EN AGRICULTURE**
KONZENTRIERTE ZUSAMMENSETZUNGEN VON WIRKSTOFFEN IN DER LANDWIRTSCHAFT
CONCENTRATED COMPOSITIONS OF ACTIVE SUBSTANCES USED IN AGRICULTURE

(30) Priorité: 28.04.1993 FR 9305263
(43) Date de publication de la demande: 14.02.1996
(73) Titulaire: RHONE-POULENC AGROCHIMIE, 69009 Lyon (FR)
(72) Inventeur: GRABER, Gérard, F-69003 Lyon (FR); BOSSY, Alain, F-69005 Lyon (FR)
(86) Numéro de dépôt international: FR9400458
(87) Numéro de publication internationale: WO9424861

(56) Documents cités:
- EP-A- 0 544 602
- WO-A-93/05652

## Description

La présente invention concerne de nouvelles compositions concentrées comprenant au moins 2 matières actives en agriculture, l'utilisation de ces compositions concentrées pour le traitement des végétaux, ainsi qu'un système de conteneurisation comprenant une telle composition.

Beaucoup de matières actives en agriculture sont utilisées dans le but d'obtenir de meilleurs résultats et de meilleurs rendements des cultures.

Dans la présente invention, par matières actives en agriculture, on entend toutes sortes de matières actives utilisées en agriculture (y compris la culture des jardins et espaces verts) telles que les agents pour la protection des plantes, les produits agrochimiques, les pesticides, les régulateurs de croissance ou les agents de nutrition des plantes. Les pesticides sont plus particulièrement des herbicides, des insecticides, des fongicides, des nématicides et des acaricides.

La plupart de ces matières actives sont fabriquées et commercialisées sous forme de compositions concentrées qui sont ensuite appliquées par l'agriculteur sous forme de compositions diluées à l'eau, après avoir mélangé lesdites compositions concentrées avec de l'eau, dans la cuve d'un appareil de pulvérisation pour traitement pesticide.

Les compositions concentrées pour dilution à l'eau se présentent sous diverses formes bien connues de l'homme de l'art. Une forme particulièrement intéressante pour l'utilisateur, c'est-à-dire l'agriculteur, est la présentation en granulés dispersables.

On entend par granulé dispersable un agglomérat solide et cohésif de particules constitutives, lesdites particules ayant une taille comprise entre 1 et 20 µm, qui après mélange à l'eau se délite ou se disperse pour donner une suspension homogène et stable. Au sens de la présente invention, un granulé dispersable ne désigne pas un granulé qui, appliqué tel quel, à sec, sur le sol, peut cependant se désintégrer au bout d'un certain temps passé dans l'environnement. La présentation en granulé dispersable offre à l'utilisateur une grande commodité d'emploi qui la rend très désirable. La préparation de ces granulés dispersables s'effectue généralement à partir de poudres mouillables ayant la même composition chimique que les granulés et dont les caractéristiques granulométriques sont celles définies ci-dessus pour les particules constitutives des granulés. Ces poudres mouillables sont humidifiées, mises en forme et enfin séchées. Cette opération conduit directement à la formation de granulés humides, qu'il convient alors de sécher pour obtenir les granulés commercialisables.

Par ailleurs, beaucoup des matières actives en agriculture ne détruisent qu'une partie des espèces nuisibles dont l'agriculteur veut préserver sa culture. Par exemple, dans le cas d'un traitement herbicide, une matière active donnée peut n'assurer que la destruction des mauvaises herbes de type graminée, ou bien n'assurer que la destruction des mauvaises herbes de type dicotylédone, ou encore assurer la destruction d'une adventice contre laquelle les autres matières actives sont sans effet.

L'agriculteur doit donc fréquemment recourir à l'application simultanée de plusieurs matières actives afin de résoudre son problème particulier de traitement phytosanitaire.

Or, l'importance relative des espèces nuisibles présentes dans une même population est susceptible de varier largement selon la localisation géographique de la zone cultivée à traiter, de sorte qu'il est nécessaire pour l' agriculteur d'adapter les quantités relatives des matières actives qu'il applique et de pulvériser une composition diluée comprenant les matières actives selon un ratio bien déterminé.

L' agriculteur peut dans ce but recourir à la pratique qualifiée d' extemporané ou de "tank-mix" en langue anglaise , c'est-à-dire au mélange de plusieurs compositions concentrées contenant chacune une seule matière active, avec de l'eau contenue dans la cuve de son pulvérisateur. Une telle pratique n'est cependant pas sans danger. En effet, en raison des problèmes de compatibilité entre les compositions concentrées dans la cuve de l'appareil de pulvérisation, l'application sur la zone cultivée des matières actives peut ne pas être homogène ce qui entraîne la présence sur certaines parties du champ d'une quantité excessive de matières actives, et, au contraire, la présence sur d'autres parties du champ d'une quantité insuffisante de matières actives. Cela peut se traduire tantôt par de la phytotoxicité, tantôt par une absence d'efficacité.

L' agriculteur peut également, dans le même but d'adapter au mieux son traitement phytosanitaire à l'importance relative des espèces nuisibles présentes sur la zone cultivée, utiliser des compositions concentées commercialisées prêtes à l'emploi, connues sous la dénomination anglaise de "ready mix". Il est assuré dans ce cas de disposer d'un produit qui conduit à une application homogène des matières actives. Cependant l'importance relative des matières actives dans ce produit est fixée par le fabricant, et peut être très éloignée de ce que l'importance relative des espèces nuisibles présentes dans la population d'espèces nuisibles de la région de l'agriculteur, rendrait nécessaire. Pour remédier à cet inconvénient, il se peut que le fabricant mette à la disposition des agriculteurs plusieurs compositions concentrées associant les mêmes matières actives selon des ratios différents.

La fabrication d'un nombre important de telles compositions concentrées, apportant de plus à l'agriculteur la commodité d'emploi des granulés dispersables, entraîne cependant pour l'industriel un certain nombre d'inconvénients et de difficultés.

En effet, la fabrication des granulés dispersables nécessite des contrôles particulièrement fins et délicats, faute de quoi on obtient des agglomérats de poudre ou des granulés dont la taille est située en dehors de la spécification que souhaite respecter le fabricant. La granulation de plusieurs poudres mouillables comprenant les mêmes matières actives à des teneurs différentes, nécessaire à l'obtention des granulés dispersables correspondants, occasionne donc pour le fabricant une multiplication de ces difficiles contrôles de procédé.

Ensuite, la phase de granulation d'une poudre mouillable doit être suivie, lorsqu'elle est terminée et avant toute nouvelle utilisation de l'appareil, autrement dit à chaque changement de tranche de fabrication, d'un nettoyage complet de celui-ci, rendu nécessaire par la présence d'agglomérats résiduels de poudre humide qui adhèrent aux parois. Lorsqu'il est nécessaire de produire de nombreux granulés dispersables comprenant les mêmes matières actives à des teneurs différentes, il est nécessaire de multiplier d'autant les changements de tranches et le nombre de nettoyages qui en résultent.

Enfin, l'existence d'un grand nombre de produits comprenant les mêmes matières actives à des teneurs différentes nécessite de la part du fabricant un travail de contrôle et de gestion des stocks correspondants particulièrement important.

Un but de la présente invention est de remédier aux inconvénients des compositions concentrées connues.

Un autre but de la présente invention est de fournir une composition concentrée adaptée au problème phytosanitaire particulier de l'agriculteur.

Un autre but de la présente invention est de fournir une composition concentrée solide dont la teneur en particules inhalables est réduite.

Un autre but de la présente invention est de permettre une gestion des stocks améliorée pour le fabricant.

Un autre but de la présente invention est de fournir des compositions concentrées pesticides de fabrication plus facile.

Un autre but de la présente invention est de fournir des compositions concentrées pesticides dont la fabrication est plus facile à contrôler.

Un autre but de la présente invention est de fournir des compositions concentrées pesticides dont la fabrication est plus rapide, en raison de la diminution du nombre des changements de tranches.

Un autre but de la présente invention est de fournir un nouveau système de conteneurisation comportant des agents de protection des plantes ayant un ou plusieurs des avantages suivants :
* on évite le contact du produit agrochimique avec l'utilisateur ou le fabricant ou le manipulateur du produit.
* le produit agrochimique est laissé au contact de l'eau où il doit se disperser et/ou se dissoudre en évitant le contact accidentel de produit concentré soit avec l'environnement soit avec les êtres humains ou les animaux.
* le produit agrochimique peut être fourni dans des unités ayant une quantité prédéterminée de matière active, évitant la nécessité de procéder à des mesures de matières actives et de produit toxique ou potentiellement toxique.

Un autre but de la présente invention est de fournir un nouveau système de présentation de matières actives en agriculture ayant simultanément les qualités suivantes :
* il est autodispersable, c'est-à-dire qu'il requiert un minimum d'énergie et de temps pour être dispersé et dilué dans la cuve de pulvérisation (contenant de l'eau)
* le contact des matières actives avec l'utilisateur (agriculteur, transporteur, manipulateur) est inexistant
* l'emballage restant après usage du produit ne contient plus aucune trace de résidu.
* il n'y a pas lieu après usage de nettoyer les emballages ayant contenu des produits agrochimiques.

Il a maintenant été trouvé que ces buts pouvaient être atteints en tout ou en partie grâce aux compositions et aux systèmes de conteneurisation selon l'invention.

Dans l'exposé de la présente invention, tous les pourcentages indiqués sont, sauf indication contraire, des pourcentages pondéraux.

Par ailleurs, on utilise ci-après les définitions suivantes pour les expressions "teneur en particules inhalables" et "taux de friabilité".

On entend par particules inhalables, que l'on désigne en langue anglaise par "air-born particles", des particules de taille inférieure à 10 µm, de préférence inférieures à 5 µm, qui sont susceptibles d'apparaître durant toute manipulation des granulés, notamment durant leur écoulement, et qui, en raison de leur taille, peuvent, entraînées par l'air, pénétrer dans les voies respiratoires des agriculteurs ou des fabricants.

La teneur en particules inhalables est mesurée selon la méthode explicitée ci-après.

Le principe de la méthode consiste à faire tomber une quantité connue de granulés dans une chambre de mesure close, de manière à faire apparaître des particules inhalables, puis à les recueillir sur un filtre au moyen d'un dispositif d'aspiration et déterminer ainsi la masse correspondante. On pèse un filtre microporeux placé sur le porte-filtre d'un dispositif de filtration. On connecte le dispositif de filtration à un débit-mètre et à une pompe a vide réglée de manière à ce que le débit d'air soit ajusté à 15 litre par minute. 30g de granulés à analyser sont versés en une seule fois en haut du tube d'appareil de mesure de hauteur 60 cm et de diamètre 4 cm aboutissant dans une chambre close cubique de hauteur 20 cm d'arête. Le dispositif de filtration est placé sur une face latérale de cette chambre. L'air contenant les particules inhalables libérées durant la chute des granulés est aspiré pendant 60 secondes et les particules sont ainsi recueillies sur le filtre. Le filtre est récupéré et pesé. La teneur en particules inhalables des granulés analysés, exprimée en milligramme, est représentée par la différence de poids de filtre avant et après l'analyse, rapportée à la masse de granulés analysés (30 g) et exprimée en pourcentage.

Par ailleurs, la méthode de mesure du taux de friabilité consiste à agiter, pendant 15 mn, 50 g de granulés en présence d'une bille d'acier, dans un poudrier de verre de 500 ml. L'ensemble des granulés et des particules fines formées est recueilli et tamisé à sec sur un tamis d'ouverture de mailles égale à 0,15 mm. Le taux de friabilité est le rapport, exprimé en pourcentage, du poids de particules fines de taille inférieure à 0,15 mm, formées au cours de l'agitation, au poids des granulés analysés (soit 50 g).

Par ailleurs encore, on utilise ci-après les définitions suivantes pour les expressions "temps de mouillabilité", "taux de dispersabilité", taux de suspensibilité".

Le temps de mouillabilité est mesuré selon la technique MT 53.3.1 décrite dans le CIPAC HANDBOOK , volume 1 pages 966-967, édité par G R Raw en 1970. Il consiste essentiellement à mesurer le temps de mouillage de 5 g de granulé versés sur 100 ml d'eau.

Le taux de dispersabilité est mesuré selon la technique suivante. On verse 10 g de granulé dans une éprouvette de 250 ml contenant 250 ml d'eau dure définie dans la méthode 18.1.4 décrite dans le CIPAC HANDBOOK, volume 1 pages 875-878. On retourne 10 fois l'éprouvette et son contenu, on verse alors le contenu sur un tamis de mailles de 160 µm on séche et pèse le résidu ; le taux de dispersabilité est alors exprimé par le pourcentage de granulé passant au travers du tamis.

Le taux de suspensibilité est mesuré selon la technique MT 15.1 note 4 décrite dans le CIPAC HANDBOOK , volume 1 pages 861-865. Il consiste essentiellement à verser 2,5 g de granulé dans une éprouvette de 250 ml contenant 250 ml d'eau dure, à retourner 30 fois l'éprouvette et son contenu, à laisser reposer 30 mn et à mesurer la masse de matière contenue dans les 25 ml (10 % du volume de l'éprouvette) inférieurs de l'éprouvette ; le taux de suspensibilité est alors exprimé par le pourcentage de matière restant en suspension dans les 90 % supérieurs de l' éprouvette.

Les compositions selon l'invention sont des compositions concentrées solides comprenant au moins 2 matières actives en agriculture, caractérisées en ce qu'elles sont un mélange de compositions concentrées qui se présentent sous forme de granulés diluables à l'eau, en ce que leur teneur en particules inhalables est inférieure à 0,1%, de préférence inférieure à 0,01%, et en ce que chaque granulé diluable à l'eau comprend au plus une matière active.

Les compositions concentrées composant les compositions objets de l'invention seront désignées dans la suite de l'exposé sous le terme de "catégories de granulés".

On entend par granulés diluables à l'eau toute espèce de granulé qui peut donner lieu après dilution à l'eau à une solution ou une dispersion aqueuse qui peut être commodément pulvérisée par l'agriculteur au moyen d'un appareil de pulvérisation et donner lieu à une répartition homogène des matières actives sur la surface à traiter. Il peut s'agir d'un granulé dont les constituants sont solubles à la dose d'emploi. Il peut s'agir également d'un granulé dont la matière active est, à la dose d'emploi, soit insoluble soit dissoute au bout d'un temps supérieur au temps usuel de préparation de la bouillie. Un tel granulé peut se présenter sous la forme de granulés dispersables comprenant ou non un agent effervescent, et donne lieu à une suspension homogène et stable. Les granulés diluables à l'eau constituent donc un ensemble incluant les granulés dispersables et les granulés solubles.

Selon un aspect avantageux de l'invention, les compositions concentrées solides de l'invention sont caractérisées en ce que le diamètre médian des granulés est compris entre 0,150 et 10 mm, de préférence entre 0,200 et 4 mm. On entend par diamètre médian, la médiane de la distribution granulométrique des granulés qui est mesurée par la méthode suivante. On fait passer 50 g de granulés à analyser sur un empilement de tamis successifs, d'ouverture de maille allant de 5 mm à 0,074 mm. Après tamisage pendant 10 mn, les résidus retenus sur chaque tamis sont pesés individuellement et exprimés en pourcentage relativement à la masse de granulés analysés. On calcule le diamètre médian par une méthode statistique usuelle, telle la régression, en supposant que les données obtenues sont distribuées selon une loi normale.

Selon un autre aspect de l'invention, les compositions concentrées solides de l'invention sont caractérisées en ce que la taille minimum des granulés diluables à l'eau est supérieure à 0,05 mm, de préférence supérieure à 0,15 mm. La taille minimum des granulés est mesurée par une méthode de tamisage à sec, ou de tamisage humide ou encore par une méthode optique, par exemple par diffraction d'un faisceau laser.

Selon un autre aspect de l'invention, les compositions concentrées solides de l'invention sont caractérisées en ce que le taux de friabilité des granulés diluables est compris entre 0 et 8 %, de préférence entre 0 et 5 %. Le taux de friabilité est mesuré selon la méthode définie précédemment.

Selon un autre aspect de l'invention, les compositions concentrées solides de l'invention sont caractérisées en ce que le rapport des diamètres médians de 2 catégories quelconques de granulés est inférieur ou égal à 10, de préférence inférieur ou égal à 2. Dans ce cas, la composition concentrée solide est plus stable, c'est-à-dire que le caractère homogène du mélange est mieux maintenu au cours du stockage et du transport.

Selon un autre aspect de l'invention, les compositions concentrées solides selon l'invention sont caractérisées en ce que la teneur en matière active de chacun des granulés contenant une matière active est comprise entre 5 et 100 %, de préférence entre 50 et 90 %. Il est bien entendu que les matières actives en agriculture présentes dans les compositions concentrées solides selon l'invention sont des produits agrochimiques et peuvent être ou bien toutes herbicides, ou bien toutes fongicides, ou bien toutes insecticides, ou bien enfin une combinaison de matières actives fongicides et insecticides.

Selon un autre aspect de l'invention, la composition concentrée solide, objet de l'invention, peut associer des matières actives qui sont incompatibles lorsqu'elles sont mélangées à l'état de poudre finement divisée (c'est-à-dire un ensemble de particules de 1 à 30 µm, de préférence 2 à 20 µm). Il en est ainsi, d'une part, lorsque le broyage dudit mélange n'est pas possible du fait de l'existence d'un eutectique à bas point de fusion entre deux ou plusieurs de ces matières actives, l'élévation de température résultant du broyage ayant alors pour effet de provoquer une fusion et une recristallisation partielle du mélange traité. Il en est également ainsi, d'autre part, lorsque, du fait de réactions chimiques, notamment acido-basiques, la quantité d'au moins une matière active, présente dans le mélange de poudre finement divisée, diminue après stockage dans les conditions usuelles d'utilisation des produits agrochimiques, c'est-à-dire durant une période de temps allant jusqu'à 2 ans, et à une température pouvant varier entre -20 et +45 °C. L'invention permet donc d'associer, sous forme de compositions prêtes à l'emploi, des matières actives incompatibles qui ne peuvent être combinées au moyen des compositions concentrées solides connues qui nécessitent un mélange de ces matières actives à l'état de particules finement divisées , notamment les poudres mouillables et les granulés dispersables. Cet aspect de l'invention n'est cependant en aucun cas limitatif de l'invention.

Selon un autre aspect de l'invention, au moins une des catégories de granulés diluables comprenant une matière active en agriculture est un granulé dispersable.

De manière préférentielle, les granulés diluables des compositions selon l'invention comprennent en outre :
- un agent mouillant, c'est-à-dire un composé permettant au granulé de pénétrer rapidement dans l'eau,
- un agent dispersant c'est-à-dire un composé assurant la tenue en suspension des particules dans la bouillie d'utilisation, et permettant la désintégration rapide du granulé dans l'eau
- un agent effervescent, c'est-à-dire un agent ou composé susceptible de libérer un gaz tel que CO₂, et par là, de rendre plus facile la désintégration du granulé dans l'eau et la dispersion de ses particules constitutives,
- un support ou charge, soluble ou insoluble dans l'eau.

Comme composés utilisables comme agent mouillant , on peut citer par exemple les sels de type alkylarylsulfonate, notamment les alkylnaphtalène sulfonates alcalins, les sels d'acides polycarboxyliques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques.

Comme composés utilisables comme agent dispersant, on peut citer par exemple les polymères de type arylsulfonate, notamment les polynaphtalène sulfonates alcalins obtenus par condensation d' (alkyl)arylsulfonates avec du formaldéhyde, les lignosulfonates, les polyphénylsulfonates, des sels d'acides polyacryliques, des sels d'acides lignosulfoniques, des sels d'acides phénolsulfoniques ou naphtalènesulfoniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents.

L'agent effervescent est avantageusement constitué d'un couple de produits tels qu'un carbonate (ou hydrogénocarbonate, de préférence alcalin) et un acide (de préférence solide et faible). Il est bien entendu que dans le cas où la base du mélange comprend une matière active possédant au moins une fonction acide, l'agent effervescent peut consister uniquement en un carbonate ou hydrogénocarbonate, de préférence alcalin. Le rapport massique entre l'acide, ou la matière active de la base du mélange possédant au moins une fonction acide, et le carbonate est généralement compris entre 0,3 et 2 , de préférence entre 0,5 et 1 .

Le support est une matière solide organique ou minérale, naturelle ou synthétique. Ce support est généralement inerte, acceptable en agriculture, notamment sur la plante traitée. Il peut être choisi par exemple parmi l'argile, la terre de diatomées, les silicates naturels ou synthétiques, la silice, les résines, les cires, les engrais solides, les sels minéraux solubles ou non, des dérivés organiques, des composés polysaccharidiques tels que amidon, cellulose, sucres, lactose.

Parmi les supports utilisables, on préfère les supports hydrophiles ayant une action désintégrante, c est-à-dire facilitant l'éclatement du granulé en ses particules constitutives en présence d'eau. Comme composés de ce type , on peut citer les bentonites (naturelles ou activées) , l'amidon et ses dérivés (notamment les alkylamidons et les carboxyalkylamidons), les celluloses (notamment la cellulose microcristalline) et les dérivés de la cellulose (notamment la carboxyalkylcellulose), les alginates, des sels minéraux solubles, la polyvinylpyrrolidone réticulée.

Lorsque les granulés diluables à l'eau des compositions selon l'invention sont des granulés dispersables, ils peuvent contenir, outre les constituants indiqués ci-avant, d'autres composés , notamment des composés ayant plus spécifiquement une action de liant, c'est-à-dire un composé de type polymérique aidant à la cohésion et à la mise en oeuvre des granulés. Ces composés à action de liant peuvent ou bien être des composés distincts de ceux cités précédemment, ou bien ils peuvent être ces mêmes composés dans la mesure où ils sont capables d' avoir une double action. Comme composés ou agents de ce type, on préfère utiliser des agents tels que des gommes, notamment la gomme arabique; des colles, notamment la dextrine; des sucres, notamment le glucose et le lactose; des dérivés cellulosiques, notamment les alkylcellulose et la carboxyalkylcellulose; l'amidon; des polymères, notamment la polyvinylpyrrolidone, l'alcool polyvinylique, le polyéthylèneglycol, le polyacrylate, les polyacétate de vinyle; des cires solubles, des silicates alcalins.

L'agent liant et l'agent ou support à propriétés désintégrantes n'ont pas des effets contraires dans la mesure où l'action de l'agent liant s'exerce à l'état solide pour lier ensemble les différentes particules solides des compositions selon l'invention, et que l'action de l'agent à propriétés désintégrantes s'exerce à l'état liquide quand les compositions selon l'invention sont dispersées dans l'eau.

Outre encore les constituants décrits ci-avant, les granulés diluables à l'eau des compositions selon l'invention peuvent contenir des anti-mousses, des séquestrants, des stabilisants, des agents de pénétration, des conservateurs, des adhésifs, des agents antimottants, des colorants et autres.

Bien entendu les compositions selon l'invention peuvent encore contenir tous les additifs solides ou liquides correspondant aux techniques habituelles de la formulation agrochimique.

Les quantités des constituants des granulés, qui sont distincts d'une matière active en agriculture, sont généralement comprises :
entre 0,1 et 8 % pour l'agent mouillant , de préférence entre 0,5 et 5 % ;
entre 0,3 et 25 % pour l'agent dispersant, de préférence entre 2 et 20 % ;
entre 0 et 80% pour l'agent effervescent; de préférence entre 0 et 50 %
entre 0 et 50 % pour le support, de préférence entre 0 et 30 % .

Parmi tous les constituants des granulés selon l'invention, on préfère en outre choisir ceux qui, par leur nature et leur dose dans les compositions selon l'invention, fournissent des granulés ayant:
* un temps de mouillabilité inférieur à 5 mn, de préférence inférieur à 2 mn,
* un taux de dispersabilité supérieur à 85 %, de préférence supérieur à 92 %,
* un taux de suspensibilité supérieur à 50 %, de préférence supérieur à 70 %.

Les granulés diluables à l'eau des compositions selon l'invention sont préparés selon des procédés connus en soi.

Ainsi, lorsque les granulés diluables sont des granulés dispersables, leur préparation s'effectue généralement à partir de poudres mouillables ayant la même composition chimique que les granulés, ces poudres mouillables étant ensuite humidifiées, mises en forme et enfin séchées.

Pour obtenir ces poudres mouillables, on mélange intimement la matière active dans des mélangeurs appropriés avec les substances additionnelles, éventuellement imprégnées sur la charge poreuse et on broie l'ensemble avec des moulins ou autres broyeurs appropriés.

Selon un premier mode de préparation de granulés utilisables dans l'invention, on humidifie les poudres mouillables par addition directe d'eau liquide (de 1 à 20 % d'eau, de préférence 10 à 18 % d'eau) , puis l'on extrude cette poudre humidifiée qui a la consistance d'une pâte à travers une grille ou plaque perforée de manière à obtenir un extrudat sous forme d'une multiplicité de cylindres allongés, qu'on appelle quelquefois des boudins, ou même des spaghettis, lesquels sont ensuite brisés en longueur de manière à produire une multitude de petits cylindres courts qui constituent les granulés selon l'invention. Ceux-ci étant humides, il suffit alors de les sécher (par exemple à plus de 50°C, de préférence à 80 °C, en atmosphère ventilée) pour obtenir les véritables granulés selon l'invention pouvant être commercialisés.

Selon un deuxième mode de préparation de granulés utilisables dans l'invention, on humidifie les poudres mouillables par pulvérisation d'eau (de 5 à 35 % d'eau, de préférence 20 à 30 % d'eau) dans un lit fluidisé formé avec la poudre mouillable. Cette opération conduit directement à la formation de granulés humides, qu'il suffit alors de sécher pour obtenir les véritables granulés selon l'invention pouvant être commercialisés.

Selon un troisième mode de préparation de granulés utilisables dans l'invention, on humidifie les poudres mouillables par pulvérisation directe d'eau liquide (de 1 à 20 % d'eau, de préférence 10 à 18 % d'eau) sur la poudre mouillable située sur un plateau incliné et tournant. Le fait que ce plateau tourne permet bien aux grains de la poudre de rester dissociés les uns des autres. La pulvérisation d'eau sur ces grains en mouvement conduit aussi à la formation de granulés humides, qu'il suffit alors de sécher (par exemple à plus de 80°C, de préférence à 100 °C, en atmosphère ventilée) pour obtenir les véritables granulés selon l'invention pouvant être commercialisés.

Selon un quatrième mode de préparation de granulés utilisables dans l'invention (dénommé atomisation), on prépare une suspension concentrée à partir de poudre mouillable par addition directe d'eau liquide (de 20 à 70 % d'eau, de préférence 30 à 50 % d'eau); cette suspension est alors pulvérisée dans un séchoir à air chaud (atomiseur) qui permet d'obtenir des granulés fins et secs par évaporation rapide de l'eau contenue dans les gouttelettes de suspension ; la température de l'air de séchage est généralement comprise entre 120 et 300 °C, de préférence entre 150 et 250 °C.

Lorsque les granulés diluables à l'eau sont des granulés effervescents, leur préparation s'effectue par agglomération à sec des constituants de la poudre mouillable comprenant de plus un agent effervescent, par une technique de compactage, de préférence à température ambiante ou au moins inférieure à 50°C. De préférence, l'appareil retenu pour cette technique est composé de deux cylindres tournants d'axes parallèles appliqués très fortement l'un vers l'autre et animés chacun d'un mouvement de rotation en sens inverse.

Il est bien entendu que les modes de préparation des catégories de granulés d'une composition selon l'invention, qui viennent d'être décrits, ne sont pas nécessairement identiques pour toutes les catégories de granulés d'une même composition selon l'invention.

Cependant dans le cas où le rapport de diamètre médian des granulés de 2 catégories de granulés quelconques d'une composition selon l'invention est inférieur ou égal à 10, le recours à un même mode de préparation est préféré. De plus, dans ce cas, l'homogénéité de forme des granulés améliore la stabilité de la composition concentrée solide selon l'invention, c'est-à-dire son aptitude à mieux conserver un caractère homogéne, après stockage et transport.

On décrit à présent un mode de réalisation des compositions concentrées solides selon l'invention, à partir des granulés dont le mode de préparation a été décrit précédemment.

Les compositions concentrées solides selon l'invention sont obtenues à partir des granulés diluables à l'eau définis ci-dessus par tout procédé permettant un mélange intime des granulés dans les proportions souhaitées.

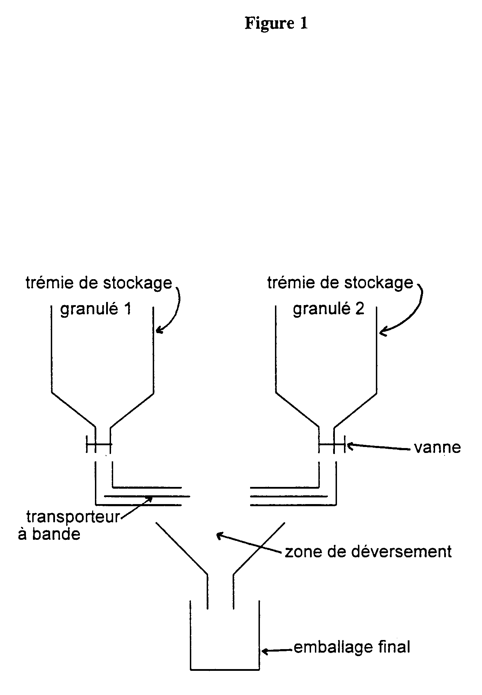

Un tel procédé de mélange est représenté sur la figure 1, dans laquelle une composition conentrée solide comprenant 2 matières actives en agriculture est préparée à partir de 2 catégories de granulés comprenant chacune une matière active. Chaque catégorie de granulés est stockée dans une trémie. Une vanne réglable permet de faire couler un débit fixé de granulés, qui sont acheminés, pour les 2 catégories de granulés, par 2 transporteurs à bandes se translatant en sens contraire et aboutissant dans une zone de déversement commune où les granulés se mélangent et s'accumulent dans le récipient de stockage. Les débits sont ajustés de manière à ce que leur rapport égale le ratio souhaité pour les 2 matières actives. Un tel procédé est particulièrement avantageux en ce qu'il permet de respecter les caractéristiques définies pour les compositions selon l'invention.

Les compositions concentrées solides selon l'invention s'utilisent pratiquement en les mettant dans des cuves contenant de l'eau ; ces cuves peuvent être soumises éventuellement à une agitation. Le mélange ainsi obtenu, appelé bouillie de pulvérisation, peut être utilisé tel quel pour être appliqué sur les surfaces cultivées ou non cultivées à traiter.

La présente invention a également pour objet un système de conteneurisation comprenant :
a) une composition agrochimique concentrée solide selon la présente invention,
b) un sac dont la paroi est un film constitué d'un matériau filmogène, soluble ou dispersable dans l'eau,
ledit sac étant fermé et renfermant ladite composition.

Par matériau dispersable dans l'eau, il faut entendre un matériau qui sous l'effet d'une agitation normale (telle que pratiquée couramment par les agriculteurs dans les cuves de pulvérisation), conduit à une dispersion de fines particules de taille inférieure à 40 µm, de préférence 15 µm.

Selon un aspect avantageux de l'invention, la quantité de composition selon l'invention présente dans un système de conteneurisation tel que défini ci-dessus est une quantité efficace pour traiter une zone donnée de terrain cultivé ou non cultive.

En vue d'améliorer le contact entre l'eau de la cuve de pulvérisation et le système de conteneurisation selon l'invention et/ou la composition selon l'invention, on préfère mettre en oeuvre des systèmes de conteneurisation exempts de poche gazeuse. Ces systèmes de conteneurisation sont généralement tels que, le sac étant scellé, il n'est pas possible de voir le moindre espace entre les compositions concentrées solides selon l'invention et la paroi du sac, et/ou qu'il n'est pas possible, manuellement, de décoller la paroi du sac des granulés diluables. Cela correspond donc à une absence de poche d'air ou autrement dit à un taux de remplissage maximum pour la forme considérée du sac. En pratique il est avantageux de remplir les sacs de l'invention sous une pression absolue inférieure à 200 millibar, de préférence inférieure à 150 millibar, de manière à assurer l'adhérence du film à la composition concentrée solide au moment de l'ensachage et avant scellement final du sac; et même jusqu'à l'usage final des systèmes de conteneurisation selon l'invention, même après stockage.

Selon un autre aspect de l'invention, la quantité de composition concentrée solide selon l'invention contenue dans le sac est comprise entre 1 g et 3 kg; de préférence entre 5 g et 1 kg, encore plus préférentiellement entre 100 g et 1 kg.

Selon un autre aspect de l'invention, le matériau filmogène soluble ou dispersable dans l'eau constituant la paroi du sac peut être de type très varié. Il est de préférence soluble dans l'eau. Il s'agit généralement de matériau polymérique tel que l'oxyde de polyéthylène, le polyéthylène glycol, l'amidon ou l'amidon modifié; l'alkyl ou hydroxyalkylcellulose, telle que l'hydroxymethylcellulose, l'hydroxyethylcellulose, l'hydroxypropyl cellulose; la carboxymethylcellulose; les polyvinylethers tels que le poly methyl vinylether ou le poly(2-methoxyethoxyethylene); le poly(2,4-dimethyl-6-triazinylethylene) ; le poly(3-morpholinyl ethylene): le poly(N-1,2,4-triazolylethylene); l'acide poly(vinylsulfonique); les polyanhydrides; les résines melamine-formaldehyde ou urée-formaldehyde à bas poids moléculaire; le poly(2-hydroxyethyl methacrylate); l'acide polyacrylique et ses homologues.

Les matériaux préférés pour constituer les sacs sont ioxyde de polyéthylène, la methylcellulose, et l'alcool polyvinylique (PVA). Un matériau préféré pour constituer les parois du sac est l'alcool polyvinylique. Quand on utilise le PVA, on préfère mettre en oeuvre un polyacétate de vinyle (ou un autre ester de vinyle) partiellement ou totalement hydrolysé ou alcoolysé, c'est-à-dire hydrolysé ou alcoolysé à 40-100%, de préférence 80-99%. Des copolymères ou d'autres dérivés de ces polymères peuvent aussi être utilises.

Selon un autre aspect de l'invention, le sac contenant la composition concentrée solide selon l'invention comprend un premier film non plan en matériau soluble ou dispersable dans l'eau , ce premier film étant adjacent à un second film, lui-même en matériau soluble ou dispersable dans l'eau, le long d'une ligne de scellement continu liant ces deux films, ladite ligne constituant une ligne fermée qui ne se recoupe pas et délimitant une région essentiellement plane.

Selon un autre aspect de l'invention, le sac contenant la composition concentrée solide selon l'invention est constitué d'un seul film, et de préférence comprend au moins trois zones de scellement, dont deux sont sensiblement rectilignes et coplanaires et coupées par la troisième en deux zones sensiblement ponctuelles.

Selon une variante de l'invention, les systèmes de conteneurisation décrits ci-avant peuvent comprendre en outre un conteneur extérieur. Ce conteneur extérieur a des parois constituées d'un système à au moins deux couches collées l'une à l'autre, l'une en papier cartonné souple, appelé en anglais kraft-liner, et l'autre en polyéthylène . Ce système bicouche peut comprendre en outre une troisième couche collée au polyéthylène et constituée d'aluminium.

Les systèmes de conteneurisation selon l'invention sont préparés selon des techniques de conditionnement connues en soi. Ils s'utilisent pratiquement en les mettant dans des cuves contenant de l'eau ; ces cuves peuvent être soumises éventuellement à une agitation et peuvent dans certains cas être portées sur le dos des utilisateurs. Le mélange ainsi obtenu, appelé bouillie de pulvérisation, peut être utilisé tel quel pour être appliqué sur les surfaces cultivées ou non cultivées à traiter.

Les exemples ci-après sont donnés à titre illustratif des compositions et systèmes de conteneurisation selon l'invention. Le procédé de mélange mis en oeuvre dans ces exemples est celui précédemment décrit.

### Exemple 1 : compositions concentrées solides à base de diflufénican et d' isoproturon

L'isoproturon et le diflufénican sont 2 matières actives utilisées dans le désherbage des céréales qui sont décrites dans le Pesticide Manual , 9ème édition, publié par le British Crop Protection Council.

De nombreuses compositions concentrées comprenant ces 2 matières actives à différents ratios sont commercialisées pour satisfaire les besoins différents des agriculteurs en fonction des populations particulières d'espèces adventices qu'ils ont à combattre. Les différents ratios (isoproturon/diflufénican) souhaités sont : 5, 8, 10, 10,7, 12, 25.

On prépare un granulé dispersable contenant 75 % de diflufénican de la façon suivante:

On mélange à sec les ingrédients suivants, à l'état de solides pulvérulents :

| | |
|---|---|
| Diflufénican | 750 g |
| Alkylnaphtalène Sulfonate de Sodium | 20 g |
| Polyphényl Sulfonate de Sodium | 100 g |
| Ligno Sulfonate de Sodium | 130 g |

Ce mélange est granulé par atomisation.

On prépare un granulé dispersable contenant 80 % d'isoproturon. On mélange à sec les ingrédients suivants, à l'état de solides pulvérulents :

| | |
|---|---|
| Isoproturon | 800 g |
| Poly Carboxylate de Sodium | 80 g |
| Dodécyl Benzène Sulfonate de Sodium | 20 g |
| Ligno Sulfonate de Sodium | 100 g |

Ce mélange est, comme le précédent, granulé par atomisation.

On prépare enfin un granulé inerte (sans matière active), en mélangeant les ingrédients suivants, à l'état de solides pulvérulents :

| | |
|---|---|
| Silico aluminate | 800 g |
| Poly Carboxylate de Sodium | 80 g |
| Dodécyl Benzène Sulfonate de Sodium | 20 g |
| Ligno Sulfonate de Sodium | 100 g |

Des compositions concentrées solides selon l'invention sont obtenues en mélangeant des quantités déterminées des granulés précédemment préparés, par un dispositif analogue à celui décrit à la figure 1. Les ratios isoproturon/diflufénican des compositions concentrées, ainsi que les quantités de granulés utilisées sont rassemblées dans le tableau ci-dessous.

| poids de granulés dispersables de diflufénican (en g) | poids de granulés dispersables d'isoproturon (en g) | poids de granulés inertes (en g) | Rapport isoproturon/diflufénican |
|---|---|---|---|
| 166,7 | 781,2 | 52,1 | 5 |
| 111,1 | 833,3 | 55,6 | 8 |
| 88,9 | 833,3 | 77,8 | 10 |
| 81 | 843,7 | 72,3 | 10,7 |
| 74,1 | 833,3 | 92,6 | 12 |
| 40 | 937,5 | 22,5 | 25 |

Les granulés des compositions concentrées solides ainsi préparées ont un diamètre médian de 250 µm. Leur teneur en particules inhalables est 0,01 % et leur taux de friabilité de 1 %. Après mélange à l'eau, ces granulés se dispersent très rapidement et donnent lieu à une suspension homogène et stable.

### Exemple 2 : compositions concentrées solides à base de carbétamide et diméfuron

Le carbétamide et le diméfuron sont 2 matières actives herbicides qui sont décrites dans le Pesticide Manual , 9ème édition, publié par le British Crop Protection Council.

Deux compositions concentrées comprenant ces 2 matières actives à 2 ratios différents sont commercialisées. Ces ratios (carbétamide/diméfuron) sont : 3 et 2.

On prépare un granulé dispersable contenant 60 % de carbétamide de la façon suivante.

On mélange à sec les ingrédients suivants, à l'état de solides pulvérulents :

| | |
|---|---|
| Carbétamide | 600 g |
| Silice Précipitée | 117 g |
| Alkyl Taurate de Sodium | 15 g |
| Poly Naphtalène Sulfonate de Sodium | 80 g |
| Alkyl Naphtalène Sulfonate de Sodium | 20 g |
| Silico Aluminate | 153 g |
| Alcool Gras en C13 | 5 g |
| Alkyl Sulfo Succinate de Sodium | 10 g |

Ce mélange est granulé à l'aide d'un granulateur à lit fluidisé.

On prépare un granulé dispersable contenant 60 % de diméfuron. On mélange à sec les ingrédients suivants, à l'état de solides pulvérulents :

| | |
|---|---|
| Diméfuron | 600 g |
| Silico Aluminate | 80 g |
| Poly Naphtalène Sulfonate de Sodium | 80 g |
| Alkyl Naphtalène Sulfonate de Sodium | 20 g |
| Amidon de maïs | 40 g |
| Alcool Gras en C13 | 5 g |
| Silice Précipitée | 5 g |
| Silico aluminate | 170 g |

Ce mélange est, comme le précédent, granulé à l'aide d'un granulateur à lit fluidisé. En mélangeant comme dans l'exemple 1 les granulés ainsi préparés, on obtient des compositions concentrées solides dont le ratio carbétamide/diméfuron est indiqué, avec les quantités de granulés utilisées, dans le tableau ci-dessous.

| poids de granulés dispersables de carbétamide (en g) | poids de granulés dispersables de diméfuron (en g) | rapport carbétamide/diméfuron |
|---|---|---|
| 750 | 250 | 3 |
| 667 | 333 | 2 |

Les granulés des compositions concentrées solides ainsi préparées ont un diamètre médian de 1 mm. Leur teneur en particules inhalables est 0,08 % et leur taux de friabilité 7 %. Après mélange à l'eau, ces granulés se dispersent très rapidement et donnent lieu à une suspension homogène et stable.

### Exemple 3 : compositions concentrées solides à base de phosétyl-Al et de mancozèbe

Le phosétyl-Al et le mancozèbe sont 2 matières actives fongicides utiles pour la vigne décrites dans le Pesticide Manual , 9ème édition, publié par le British Crop Protection Council.

Il est souhaitable de disposer de 2 compositions concentrées comprenant ces 2 matières actives dans un rapport phoséthyl-Al/mancozèbe égal à 1 et 1,7.

On prépare un granulé dispersable contenant 80 % de phoséthyl-Al de la façon suivante.

On mélange à sec les ingrédients suivants, à l'état de solides pulvérulents :

| | |
|---|---|
| Phoséthyl Al | 800 g |
| Alkyl Phénol Ethoxylé | 52 g |
| Alkyl Phénol Ethoxylé | 10 g |
| Acétate de Sodium | 20 g |
| Ligno Sulfonate de Sodium | 44 g |
| Huile Silicone | 5 g |
| Silico Aluminate | 38 g |
| Silice Précipitée | 17 g |

Ce mélange est granulé par atomisation.

On prépare également un granulé dispersable contenant 75 % de mancozèbe, en mélangeant tout d'abord à sec les ingrédients suivants, broyés à l'état de solides pulvérulents :

| | |
|---|---|
| Mancozèbe | 750 g |
| Dioctyl Sulfo Succinate de Sodium | 20 g |
| Poly Naphtalène Sulfonate de Sodium | 230 g |

Ce mélange est également granulé par atomisation.

Des compositions concentrées solides selon l'invention sont obtenues en mélangeant comme dans les exemples précédents les 2 granulés ainsi préparés. Les ratios phoséthyl-Al/mancozèbe des compositions concentrées, ainsi que les quantités de granulés utilisées sont rassemblées dans le tableau ci-dessous :

| poids de granulés dispersables de phoséthyl-Al (en g) | poids de granulés dispersables de mancozèbe (en g) | rapport phoséthyl-Al/mancozèbe |
|---|---|---|
| 500 | 500 | 1 |
| 626 | 374 | 1,67 |

Les granulés des compositions concentrées solides ainsi préparées ont un diamètre médian de 300 µm. Leur teneur en particules inhalables est 0,01 % et leur friabilité de 1,7 %. Après mélange à l'eau, ces granulés se dispersent très rapidement et donnent lieu à une suspension homogène et stable.

### Exemple 4 : systèmes de conteneurisation comprenant des compositions concentrées solides à base de diflufénican et d'isoproturon

40 g de chacun des mélanges à base de diflufénican et d'isoproturon de l'exemple 1 sont introduits, chacun, dans une poche constituée par un film en alcool polyvinylique (polyacétate de vinyle hydrolysé à 88 %) soluble dans l'eau froide. Ce film a été thermoformé, c'est-à-dire qu'il a été déformé par la chaleur et qu'on lui a fait épouser par aspiration la forme d'une poche, donnée par une matrice . Un deuxième film est posé sur ladite poche, et est fixé à celle-ci par soudage à chaud, simultanément à la création de vide au moyen d'une pompe donnant naissance à une pression absolue de 100 millibar. . On n'observe aucun espace libre entre les granulés diluables et la paroi des sacs obtenus.

Chacun de ces sacs est jeté dans une cuve de 100 litres d'eau agitée. Le film PVA de chacun des sacs se fragmente et libère les granulés qui se dispersent de façon homogène dans l'ensemble de la cuve. Le film de PVA est dissous au bout de 5 minutes.

### Exemple 5 : systèmes de conteneurisation comprenant des compositions concentrées solides à base de carbétamide et de diméfuron

100 g de chacun des mélanges de l'exemple 2 sont introduits, chacun, dans un sachet en alcool polyvinylique(polyacétate de vinyle hydrolysé à 88 %) soluble dans l'eau froide, selon un mode opératoire identique à celui de l'exemple 4. Tout élément de surface du sachet est en contact avec les granulés des compositions solides, de sorte que l'on n'observe la présence d'aucune poche d'air.

Chacun des sacs obtenus est jeté dans une cuve de 100 litres d'eau agitée. Le sac se fragmente et libère les granulés qui se dispersent de façon homogène. Le film de PVA est dissous au bout de 5 minutes.

### Exemple 6 : systèmes de conteneurisation comprenant des compositions concentrées solides à base de phosétyl-Al et de mancozèbe

500 g de chacun des mélanges de l'exemple 3 sont introduits chacun dans un sachet en alcool polyvinylique (polyvinylacétate de vinyle hydrolysé à 88 %) soluble dans l'eau froide. Ce sachet a été obtenu à partir d'un seul film rectangulaire qui a reçu deux lignes de soudure perpendiculaires. Après introduction des granulés, le sac reçoit une troisième ligne de soudure par scellage à chaud.

Chacun des sacs obtenus est traité comme dans l'exemple 5. On obtient le même résultat.

## Revendications

1. Compositions concentrées solides comprenant au moins 2 matières actives en agriculture, caractérisées en ce qu'elles sont un mélange de compositions concentrées qui se présentent sous forme de granulés diluables à l'eau, en ce que leur teneur en particules inhalables est inférieure à 0,1%, de préférence inférieure à 0,01%, et en ce que chaque granulé diluable à l'eau comprend au plus une matière active

2. Compositions selon la revendication 1 caractérisées en ce que le diamètre médian des granulés est compris entre 0,150 et 10 mm, de préférence entre 0,200 et 4 mm

3. Compositions selon l'une des revendications 1 ou 2 caractérisées en ce que la taille minimum des granulés diluables à l'eau est supérieure à 0,05 mm, de préférence supérieure à 0,15 mm

4. Compositions selon l'une des revendications 1 à 3 caractérisées en ce que le taux de friabilité des granulés diluables est compris entre 0 et 8 %, de préférence entre 0 et 5 %

5. Compositions selon l'une des revendications 1 à 4 caractérisées en ce que le rapport des diamètres médians de 2 catégories quelconques de granulés est inférieur ou égal à 10, de préférence inférieur ou égal à 2

6. Compositions selon l'une des revendications 1 à 5 caractérisées en ce que la teneur en matière active de chacun des granulés contenant une matière active est comprise entre 5 et 100 %, de préférence entre 50 et 90 %

7. Compositions selon lune des revendications 1 à 6 caractérisées en ce qu'elles associent des matières actives qui sont incompatibles lorsqu'elles sont mélangées à l'état de poudre finement divisée

8. Compositions selon l'une des revendications 1 à 7 caractérisées en ce que les granulés diluables à l'eau incluent les granulés dispersables et les granulés solubles

9. Compositions selon l'une des revendications 1 à 8 caractérisées en ce que au moins une des catégories de granulés diluables comprenant une matière active en agriculture est un granulé dispersable

10. Compositions selon l'une des revendications 1 à 9 caractérisées en ce que les granulés diluables comprennent en outre un agent mouillant, un agent dispersant, un agent effervescent, un support

11. Compositions selon l'une des revendications 1 à 10 caractérisées en ce que les quantités de constituants des granulés, qui sont distincts d'une matière active en agriculture, sont comprises :
entre 0,1 et 8 % pour l'agent mouillant , de préférence entre 0,5 et 5 %;
entre 0,3 et 25 % pour l'agent dispersant, de préférence entre 2 et 20 % ;
entre 0 et 80% pour l'agent effervescent; de préférence entre 0 et 50 %
entre 0 et 50 % pour le support, de préférence entre 0 et 30 %

12. Compositions selon l'une des revendications 1 à 11 caractérisées en ce que les granulés ont un temps de mouillabilité inférieur à 5 mn, de préférence inférieur à 2 mn, un taux de dispersabilité supérieur à 85 %, de préférence supérieur à 92 %, un taux de suspensibilité supérieur à 50 %, de préférence supérieur à 70 %

13. Système de conteneurisation comprenant :
a) une composition agrochimique concentrée solide selon l'une des revendications 1 à 12,
b) un sac dont la paroi est un film constitué d'un matériau filmogène soluble ou dispersable dans l'eau,
ledit sac étant fermé et renfermant ladite composition.

14. Système de conteneurisation selon la revendication 13, caractérisé en ce que il est exempt de poche gazeuse.

15. Système de conteneurisation selon l'une des revendications 13 ou 14, caractérisé en ce que le sac étant scellé, il n'est pas possible de voir le moindre espace entre les compositions concentrées solides et la paroi du sac, et/ou qu'il n'est pas possible, manuellement, de décoller la paroi du sac des granulés diluables.

16. Système de conteneurisation selon l'une des revendications 13 à 15, caractérisé en ce que la quantité de composition concentrée solide selon l'invention contenue dans le sac est comprise entre 1 g et 3 kg, de préférence entre 5 g et 1 kg, encore plus préférentiellement entre 100 g et 1 kg.

17. Système de conteneurisation selon l'une des revendications 13 à 16, caractérisé en ce que le sac est dans un matériau choisi parmi l'oxyde de polyéthylène, la methylcellulose, l'alcool polyvinylique, et est de préférence l'alcool polyvinylique.

18. Système de conteneurisation selon l'une des revendications 13 à 17, caractérisé en ce que le sac contenant la composition concentrée solide comprend un premier film non plan en matériau soluble ou dispersable dans l'eau, ce premier film étant adjacent à un second film, lui-même en matériau soluble ou dispersable dans l'eau, le long d'une ligne de scellement continu liant ces deux films, ladite ligne constituant une ligne fermée qui ne se recoupe pas et délimitant une région essentiellement plane.

19. Système de conteneurisation selon l'une des revendications 13 à 18. caractérisé en ce que le sac contenant la composition concentrée solide est constitué d'un seul film, et de préférence comprend au moins trois zones de scellement, dont deux sont sensiblement rectilignes et coplanaires et coupées par la troisième en deux zones sensiblement ponctuelles.

20. Système de conteneurisation selon l'une des revendications 13 à 19, caractérisé en ce que il comprend en outre un conteneur extérieur.

21. Procédé de préparation d'un mélange destiné à être appliqué sur les surfaces cultivées ou non cultivées à traiter, caractérisé en ce qu'on met dans l'eau d'une cuve de pulvérisation une composition concentrée solide selon l'une des revendications 1 à 12 ou un sytème de conteneurisation selon l'une des revendications 13 à 19.

## Claims

1. Solid concentrated compositions comprising at least 2 agriculturally-active materials, characterized in that they are a mixture of concentrated compositions which are provided in the form of water-dilutable granules, in that their air-borne particles content is less than 0.1%, preferably less than 0.01%, and in that each water-dilutable granule comprises at most one active material.

2. Compositions according to claim 1, characterized in that the median diameter of the granules is between 0.150 and 10 mm, preferably between 0.200 and 4 mm.

3. Compositions according to one of claims 1 or 2, characterized in that the minimum size of the water-dilutable granules is greater than 0.05 mm, preferably greater than 0.15 mm.

4. Compositions according to one of claims 1 to 3, characterized in that the degree of friability of the dilutable granules is between 0 and 8%, preferably between 0 and 5%.

5. Compositions according to one of claims 1 to 4, characterized in that the ratio of the median diameters of any 2 granule categories is less than or equal to 10, preferably less than or equal to 2.

6. Compositions according to one of claims 1 to 5, characterized in that the active material content of each of the granules containing an active material is between 5 and 100%, preferably between 50 and 90%.

7. Compositions according to one of claims 1 to 6, characterized in that they combine active materials which are incompatible when they are mixed in the finely divided powder form.

8. Compositions according to one of claims 1 to 7, characterized in that the water-dilutable granules include dispersible granules and soluble granules.

9. Compositions according to one of claims 1 to 8, characterized in that at least one of the dilutable granule categories comprising an agriculturally-active material is a dispersible granule.

10. Compositions according to one of claims 1 to 9, characterized in that the dilutable granules additionally comprise a wetting agent, a dispersing agent, an effervescent agent and a vehicle.

11. Compositions according to one of claims 1 to 10, characterized in that the amounts of constituents of the granules, which are distinct from an agriculturally-active material, are:
between 0.1 and 8% for the wetting agent, preferably between 0.5 and 5%;
between 0.3 and 25% for the dispersing agent, preferably between 2 and 20%;
between 0 and 80% for the effervescent agent, preferably between 0 and 50%;
between 0 and 50% for the vehicle, preferably between 0 and 30%.

12. Compositions according to one of claims 1 to 11, characterized in that the granules have a wettability time less than 5 min, preferably less than 2 min, a degree of dispersibility greater than 85%, preferably greater than 92%, and a degree of suspensibility greater than 50%, preferably greater than 70%.

13. Containerization system comprising:
a) a solid concentrated agrochemical composition according to one of claims 1 to 12,
b) a bag, the wall of which is a film consisting of a water-soluble or water-dispersible film-forming material,
the said bag being closed and containing the said composition.

14. Containerization system according to claim 13, characterized in that it is free of gas pockets.

15. Containerization system according to one of claims 13 or 14, characterized in that, the bag being sealed, it is not possible to see the least space between the solid concentrated compositions and the wall of the bag and/or that it is not possible, manually, to pull the wall of the bag away from the dilutable granules.

16. Containerization system according to one of claims 13 to 15, characterized in that the amount of solid concentrated composition according to the invention contained in the bag is between 1 g and 3 kg, preferably between 5 g and 1 kg, still more preferentially between 100 g and 1 kg.

17. Containerization system according to one of claims 13 to 16, characterized in that the bag is in a material chosen from polyethylene oxide, methylcellulose or poly(vinyl alcohol) and is preferably poly(vinyl alcohol).

18. Containerization system according to one of claims 13 to 17, characterized in that the bag containing the solid concentrated composition comprises a first non-planar film made of water-soluble or water-dispersible material, this first film being adjacent to a second film, itself made of water-soluble or water-dispersible material, along a continuous sealing line bonding these two films, the said line constituting a closed line which is not intersected and which delimits an essentially planar area.

19. Containerization system according to one of claims 13 to 18, characterized in that the bag containing the solid concentrated composition consists of a single film and preferably comprises at least three sealing areas, two of which are substantially rectilinear and coplanar and cut by the third into two substantially limited areas.

20. Containerization system according to one of claims 13 to 19, characterized in that it additionally comprises an outer container.

21. Process for the preparation of a mixture intended to be applied on the cultivated or non-cultivated surfaces to be treated, characterized in that there is put into the water of a spray tank a solid concentrated composition according to one of claims 1 to 12 or a containerization system according to one of claims 13 to 19.

## Patentansprüche

1. Feste konzentrierte Zusammensetzungen, die mindestens zwei landwirtschaftliche Wirkstoffe enthalten,
dadurch gekennzeichnet, daß
sie ein Gemisch konzentrierter Zusammensetzungen sind, die in Form von mit Wasser verdünnbaren Granulaten vorliegen, und daß ihr Gehalt an einatembaren Partikeln kleiner als 0,1 %, vorzugsweise kleiner als 0,01 %, ist und daß jedes mit Wasser verdünnbare Granulat außerdem einen Wirkstoff enthält.

2. Zusammensetzungen nach Anspruch 1, dadurch gekennzeichnet, daß der mittlere Durchmesser der Granulatkörner 0,15 bis 10 mm, vorzugsweise 0,2 bis 4 mm, beträgt.

3. Zusammensetzungen nach einem der Ansprüche 1 und 2, dadurch gekennzeichnet, daß die kleinste Größe der mit Wasser verdünnbaren Granulate größer als 0,05 mm, vorzugsweise größer als 0,15 mm, ist.

4. Zusammensetzungen nach einem der Ansprüche 1 bis 3, dadurch gekennzeichnet, daß der Zerreibbarkeitsgrad der mit Wasser verdünnbaren Granulate 0 bis 8 %, vorzugsweise 0 bis 5 %, beträgt.

5. Zusammensetzungen nach einem der Ansprüche 1 bis 4, dadurch gekennzeichnet, daß das Verhältnis der mittleren Durchmesser von zwei beliebigen Klassen von Granulaten kleiner als oder gleich 10 und vorzugsweise kleiner als oder gleich 2 ist.

6. Zusammensetzungen nach einem der Ansprüche 1 bis 5, dadurch gekennzeichnet, daß der Wirkstoffgehalt jedes Granulats, das einen Wirkstoff enthält, 5 bis 100 % und vorzugsweise 50 bis 90 % beträgt.

7. Zusammensetzungen nach einem der Ansprüche 1 bis 6, dadurch gekennzeichnet, daß in ihnen Wirkstoffe kombiniert sind, die miteinander nicht kompatibel sind, wenn sie in Form von fein zerteilten Pulvern vermischt werden.

8. Zusammensetzungen nach einem der Ansprüche 1 bis 7, dadurch gekennzeichnet, daß bei den mit Wasser verdünnbaren Granulaten dispergierbare und lösliche Granulate eingeschlossen sind.

9. Zusammensetzungen nach einem der Ansprüche 1 bis 8, dadurch gekennzeichnet, daß mindestens eine der Klassen von verdünnbaren Granulaten, die einen landwirtschaftlichen Wirkstoff enthält, ein dispergierbares Granulat ist.

10. Zusammensetzungen nach einem der Ansprüche 1 bis 9, dadurch gekennzeichnet, daß die verdünnbaren Granulate ferner ein Netzmittel, ein Dispergiermittel, ein Schaummittel und/oder einen Träger enthalten.

11. Zusammensetzungen nach einem der Ansprüche 1 bis 10, dadurch gekennzeichnet, daß die Mengen der vom landwirtschaftlichen Wirkstoff verschiedenen Bestandteile des Granulats in den folgenden Bereichen liegt:
- 0,1 bis 8 % und vorzugsweise 0,5 bis 5 % Netzmittel,
- 0,3 bis 25 % und vorzugsweise 2 bis 20 % Dispergiermittel,
- 0 bis 80 % und vorzugsweise 0 bis 50 % Schaummittel,
- 0 bis 50 % und vorzugsweise 0 bis 30 % Träger.

12. Zusammensetzungen nach einem der Ansprüche 1 bis 11, dadurch gekennzeichnet, daß die Granulate eine Benetzungszeit von weniger als 5 min, vorzugsweise weniger als 2 min, einen Dispergierbarkeitsgrad von mehr als 85 %, vorzugweise mehr als 92 %, und einen Suspendierbarkeitsgrad von mehr als 50 %, vorzugsweise mehr als 70 %, aufweisen.

13. Containerisierungssystem, das enthält:
a) eine-feste konzentrierte agrochemische Zusammensetzung nach einem der Ansprüche 1 bis 12,
b) einen Beutel, dessen Wandung aus einem Film bzw. Folie besteht, der aus einem in Wasser löslichen oder dispergierbaren filmbildenden Material besteht,
wobei der Beutel geschlossen ist und die Zusammensetzung enthält.

14. Containerisierungssystem nach Anspruch 13, dadurch gekennzeichnet, daß es frei von Gaseinschlüssen ist.

15. Containerisierungssystem nach einem der Ansprüche 13 und 14, dadurch gekennzeichnet, daß, wenn der Beutel verschlossen ist, es nicht möglich ist, auch nur den geringsten Zwischenraum zwischen den festen konzentrierten Zusammensetzungen und der Wandung des Beutels zu sehen, und/oder daß es nicht möglich ist, die Wandung des Beutels von dem verdünnbaren Granulat von Hand abzulösen.

16. Containerisierungssystem nach einem der Ansprüche 13 bis 15, dadurch gekennzeichnet, daß die in dem Beutel enthaltene Menge an erfindungsgemäßer fester konzentrierter Zusammensetzung 1 g bis 3 kg, vorzugsweise 5 g bis 1 kg und noch bevorzugter 100 g bis 1 kg beträgt.

17. Containerisierungssystem nach einem der Ansprüche 13 bis 16, dadurch gekennzeichnet, daß der Beutel aus einem Material besteht, das unter Polyethylenoxid, Methylcellulose und Polyvinylalkohol ausgewählt ist und vorzugsweise aus Polyvinylalkohol besteht.

18. Containerisierungssystem nach einem der Ansprüche 13 bis 17, dadurch gekennzeichnet, daß der die feste konzentrierte Zusammensetzung enthaltende Beutel einen ersten nicht flächigen Film aus einem in Wasser löslichen oder dispergierbaren Material umfaßt, wobei dieser erste Film an einen zweiten Film, welcher ebenfalls aus einem in Wasser löslichen oder dispergierbaren Material besteht, entlang einer zum kontinuierlichen Verschließen dienenden Linie angrenzt, die diese beiden Filme verbindet, wobei die Linie eine geschlossene Linie bildet, die sich nicht überschneidet, und einen im wesentlichen flächigen Bereich begrenzt.

19. Containierisierungssystem nach einem der Ansprüche 13 bis 18, dadurch gekennzeichet, daß der die feste konzentierte Zusammensetzung enthaltende Beutel aus einem einzigen Film besteht und vorzugsweise mindestens drei zum Verschließen dienende Bereiche aufweist, von denen zwei im wesentlichen geradlinig und coplanar sind und von dem dritten Bereich in zwei im wesentlichen punktförmige Bereiche unterteilt werden.

20. Containerisierungssystem nach einem der Ansprüche 13 bis 19, dadurch gekennzeichnet, daß es ferner einen äußeren Behälter bzw. Container aufweist.

21. Verfahren zur Herstellung eines Gemischs, das dafür bestimmt ist, auf zu behandelnde kultivierte oder nicht kultivierte Flächen aufgebracht zu werden, dadurch gekennzeichnet, daß in das Wasser in einem Zerstäubungsbehälter eine feste konzentrierte Zusammensetzung nach einem der Ansprüche 1 bis 12 oder ein Containerisierungs- bzw. Behältersystem nach einem der Ansprüche 13 bis 19 eingebracht wird.
